# EUROPÄISCHE PATENTANMELDUNG

(11) **EP 2 465 839 A1**
(43) Veröffentlichungstag der Anmeldung: **20.06.2012**
(21) Anmeldenummer: 10195179.6
(22) Anmeldetag: 15.12.2010
(51) Int. Cl.: C05G 3/00

(54) **Mischungen auf Basis von schwefelvernetztem Triglycerid, ein Verfahren zu deren Herstellung und deren Verwendung als Düngemittel**

(71) Anmelder: Rhein Chemie Rheinau GmbH, 68219 Mannheim (DE)
(72) Erfinder: Müller, Helmut, Dipl.-Ing., 97318 Kitzingen (DE)
(74) Vertreter: Siegers, Britta

(57) **Zusammenfassung**

Die vorliegende Erfindung betrifft Mischungen auf Basis von schwefelvernetztem Triglycerid, und mindestens ein Rieselhilfsmittel auf Basis von Kieselsäure, Stärke, Bentonit und/oder Metalloxiden, Verfahren zu deren Herstellung und deren Verwendung als Düngemittel, insbesondere zur Beschleunigung des Wachstums bei Pflanzen mit Schwefelbedarf.

## Beschreibung

Die vorliegende Erfindung betrifft neuartige Mischungen auf Basis von schwefelvernetztem Triglycerid, Verfahren zu deren Herstellung und deren Verwendung als Düngemittel, insbesondere zur Beschleunigung des Wachstums bei Pflanzen mit Schwefelbedarf.

Das Wachstum von Pflanzen bedarf neben Wasser, Kohlendioxid und Sonnenlicht weiterhin der Hauptnährstoffe Stickstoff, Kali und Phosphat sowie Sekundärnährstoffen und Spurenelementen. Auch Schwefel ist ein lebensnotwendiger Sekundärnährstoff vor allem in der Proteinsynthese der Pflanzen, der von diesen bevorzugt als Sulfat über die Wurzel aufgenommen wird.

In den letzten ein bis zwei Jahrzehnten ist gebietsweise eine Verarmung an Schwefel in landwirtschaftlich genutzten Böden festzustellen. Diese wird durch die Verminderung der Schwefelemissionen infolge vermehrter Rauchgasentschwefelung und Reduktion des Schwefelgehaltes in Treib- und Brennstoffen hervorgerufen.

Für die Schwefel-Düngung steht eine Vielzahl von mineralischen Düngemitteln zur Verfügung. Sie unterscheiden sich vor allem in der Bindungsform (Sulfat, elementarer S) und damit der Wirkungsgeschwindigkeit. In den meisten schwefelhaltigen Mineraldüngern liegt Schwefel als Sulfat vor. Schwefel in der Sulfat-Form steht den Pflanzen unmittelbar zur Verfügung. Schwefel in elementarer Form (z. B. Netzschwefel) kann von Pflanzen nicht direkt aufgenommen werden, sondern muss erst von Thiobakterien zu Sulfat umgewandelt werden, was sich bei Bodentemperaturen < 10°C über einen längeren Zeitraum hinziehen kann. Sulfate haben zudem den Nachteil, dass sie in der Regel gut wasserlöslich sind und damit, vor allem in regenreichen Gebieten, zu schnell aus dem Boden herausgewaschen werden und somit der Pflanze in einem relativ kurzen Zeitraum zur Verfügung steht.

In der DE 102007034278 A wird eine Abmischung von Ammoniumsulfat als mineralischem Schwefeldünger mit Kalk zur Vermeidung der Versauerung des Bodens durch Schwefeldünger beschrieben. Der Nachteil, dass das Sulfat zu schnell aus dem Boden herausgewaschen wird, besteht jedoch weiterhin.

Es bestand daher die Aufgabe, Mischungen bereitzustellen, die als effektive Düngemittel einsetzbar sind, ökologisch unbedenklich sind und die der Pflanze mindestens über die gesamte Wachstumsperiode zur Verfügung stehen.

Überraschenderweise wurde nun gefunden, dass Mischungen auf Basis von schwefelvernetztem Triglycerid und weiteren Rieselhilfsmitteln diese Aufgabe erfüllen und ein sehr effektives Düngemittel für Pflanzen mit Schwefelbedarf darstellen.

Gegenstand der vorliegenden Erfindung sind Mischungen, enthaltend mindestens ein schwefelvernetztes Triglycerid und mindestens ein Rieselhilfsmittel auf Basis von Kieselsäure, Stärke und/oder Metalloxiden.

In einer bevorzugten Ausführungsform der Erfindung handelt es sich bei dem Triglycerid um Babussaöl, Baumwollsaatöl, Borretschöl, Distelöl (= Safloröl), Erdnussöl, Johannisbeerkernöl, Haselnussöl, Heringsöl, Holzöl, Jojobaöl, Kokosöl, Klauenöl, Knochenöl, Leberöl, Leinöl, Maiskeimöl, Mandelöl, Olivenöl, Palmkernöl, Rapsöl (= Rüböl), Rizinusöl, Sardinenöl, Senfsaatöl, Sojabohnenöl, Sonnenblumenöl, Sheabutter, Traubenkernöl und/oder Walnussöl.

Bevorzugt eingesetzt werden Rüböl, Sojabohnenöl, Sonnenblumenöl und/oder Rizinusöl.

In einer weiteren bevorzugten Ausführungsform der Erfindung werden Gemische aus Triglyceriden eingesetzt. In diesen Fällen sind Mischungen aus Rüböl, Sojabohnenöl, Sonnenblumenöl und Rizinusöl bevorzugt. In diesen Fällen kann das Verhältnis der Triglyceride zueinander beliebig gewählt werden und wird in der Regel vom Rohstoffpreis bestimmt.

Alle vorgenannten Triglyceride sind handelsüblich und so z.B. erhältlich bei der Firma Gustav Heess GmbH & Co KG.

Bei dem schwefelvernetzten Triglycerid im Sinne der Erfindung handelt es sich vorzugsweise um solche Verbindungen, die erhältlich sind über die Umsetzung von mindestens einem Triglycerid mit dem Schwefel bei Temperaturen von > 150°C.

Dabei ist folgendes Herstellverfahren bevorzugt:
Das Triglycerid oder das Gemisch aus mehreren Triglyceriden wird vorgelegt, auf Temperaturen von mindestens 150 °C erwärmt,
der Schwefel in der gewünschten Menge durch Erwärmen / Aufschmelzen in den flüssigen Aggregatzustand überführt und unter Rühren dem Triglycerid oder dem Gemisch aus mehreren Triglyceriden, vorzugsweise portionsweise, zugegeben, gegebenenfalls zur Vervollständigung der Reaktion bei Temperaturen > 150°C nachgerührt, in Formen gegossen und dort bei Temperaturen > 120°C getempert. Nach dem Abkühlen wird das schwefelvernetzte Triglycerid vorzugsweise zerkleinert.

Zur Zerkleinerung sind alle gängigen handelsüblichen Schneidmühlen, wie z.B. Schneidmühle der Firma Pallmann Maschinenfabrik GmbH & Co. KG einsetzbar.

Der Schwefel wird dabei vorzugsweise in elementarer Form, besonders bevorzugt als S8-Schwefel, eingesetzt.

In einer weiteren bevorzugten Ausführungsform der Erfindung beträgt der Schwefelanteil in dem schwefelvernetzten Triglycerid 10-30 Gew%, besonders bevorzugt 10-20 Gew%, bezogen auf das Triglycerid.

Der Anteil an schwefelvernetzem Triglycerid in der Mischung beträgt vorzugsweise mehr als 60 %, bezogen auf die Gesamtmischung. Besonders bevorzugt ist ein Anteil von 90,0 % bis 99,9 %, wobei die Summe aller Bestandteile der Mischung 100% ergibt.

Bei den schwefelvernetzten Triglyceriden handelt es sich um kommerziell verfügbare Substanzen, die z.B. bei der Rhein Chemie Rheinau GmbH unter dem Namen Rhenopren® erhältlich sind.

Bei den Rieselhilfsmitteln im Sinne der Erfindung handelt es sich um Trennmittel, die mit dem zerkleinerten schwefelvernetzten Triglycerid vermischt werden, um vorrangig zum Zweck der besseren maschinellen Verwendbarkeit und der Dosierbarkeit, das Zusammenklumpen zu verhindern.

Bei den im Sinne der Erfindung eingesetzten Rieselhilfsmitteln handelt es sich vorzugsweise um pyrogene und/oder gefällte Kieselsäure, erhältlich bei der Firma Evonik Degussa GmbH unten den Namen Sipernat® oder Aerosil®, Polysacchariden aus α-D-Glucose-Einheiten als Stärke, erhältlich bei der Firma Südstärke GmbH unter dem Namen Kartoffelstärke Superior, Bentonit als Mischung aus verschiedenen Tonmineralien, wie Montmorillonit, Quarz, Glimmer, Feldspat, Pyrit oder auch Calcit, erhältlich bei S&B Industrial Minerals GmbH unter dem Namen IBECO® AGROMONT und/oder Metalloxide, der Elemente Mg, Ca, erhältlich bei den Firmen Rhein Chemie Rheinau GmbH unter dem Namen Rhenofit®.

Die erfindungsgemäßen Mischungen können dabei auch weitere Zusatzstoffe enthalten und/oder auch kombiniert werden mit gängigen stickstoff- und/oder phosphorhaltigen Verbindungen, wie z.B. Ammoniumnitrat und/oder Diammoniumphosphat, oder Spurenelementen, wie Bor, Zink, Kupfer, Eisen, Molybdän und/oder Mangan.

Bei diesen Substanzen handelt es sich um handelsübliche Verbindungen.

Der Anteil je Zusatzstoff beträgt vorzugsweise 0,0 bis 10% der Mischung, wobei für die Spurenelemente Mengen von 0,0 bis 1,0 % der Mischung bevorzugt sind.

Der Anteil an Rieselhilfsmittel beträgt vorzugsweise 0,1-40 Gew.%, besonders bevorzugt 1-5%. Die Rieselhilfsmittel haben vorzugsweise eine Teilchengröße von 0,5 - 4,0 µm.

Die erfindungsgemäßen Mischung weist dabei vorzugsweise eine Korngröße von 0,3-20 mm auf.

Gegenstand der vorliegenden Erfindung ist auch ein Verfahren zur Herstellung der Mischung, wonach das schwefelvernetzte Triglycerid vermahlen, mit dem Rieselhilfsmittel und gegebenenfalls weiteren Zusatzstoffen vermischt wird.

Für das Vermahlen sind alle gängige Schneidmühlen, wie z.B. Schneidmühle der Firma Pallmann Maschinenfabrik GmbH & Co. KG einsetzbar.

Das Vermahlen erfolgt vorzugsweise bei einer Temperatur von 30°C bis 50°C bei einer Mahlleistung von 400 - 600 kg/h.

Zum Vermischen geeignet sind z.B. Pulvermischer, erhältlich bei der Firma Eirich Maschinenfabrik Gustav Eirich GmbH & Co KG.

Gegenstand der vorliegenden Erfindung sind auch Düngemittel enthaltend mindestens ein schwefelvernetztes Triglycerid, mindestens ein Rieselhilfsmittel auf Basis von Kieselsäure, Stärke, Bentonit und/oder Metalloxiden und gegebenenfalls weitere Zusatzstoffe.

Unter Düngemittel im Sinne der Erfindung sind Stoffe und Stoffgemische, die in der Landwirtschaft und im Gartenbau dazu dienen, das Nährstoffangebot für die Kulturpflanzen zu erhöhen, zu verstehen. Meist können dadurch höhere Erträge oder schnelleres Wachstum erzielt werden. Der Begriff Düngemittel umfaßt dabei mineralische, organische und/oder organo-mineralische Dünger.

In Bezug auf die schwefelvernetzten Triglyceride, die Rieselhilfsmittel auf Basis von Kieselsäure, Stärke, Bentonit und/oder Metalloxiden wird auf die vorgenannten Ausführungen verwiesen.

Als Zusatzstoffe im Sinne der Erfindung sind einsetzbar stickstoff- und/oder phosphorhaltigen Verbindungen, wie z.B. Ammoniumnitrat und/oder Diammoniumphosphat und/oder Spurenelementen, wie Bor, Zink, Kupfer, Eisen, Molybdän und/oder Mangan.

Gegenstand der vorliegenden Erfindung ist auch die Verwendung von schwefelvernetztem Triglycerid als Düngemittel sowie die Verwendung der erfindungsgemäßen Mischungen als Düngemittel.

In Bezug auf die schwefelvernetzten Triglyceride, die Rieselhilfsmittel auf Basis von Kieselsäure, Stärke, Bentonit und/oder Metalloxiden, sowie die Zusatzstoffe wird auf die obigen Ausführungen verwiesen.

Ebenfalls Gegenstand der vorliegenden Erfindung ist auch die Verwendung der erfindungsgemäßen Mischungen zur Beschleunigung des Wachstums bei Pflanzen mit Schwefelbedarf.

Bei Pflanzen mit Schwefelbedarf handelt es sich vorzugsweise um Kreuzblütengewächse wie z.B. Raps und Senf, Getreide, wie z.B. Weizen, Mais, Hirse, Roggen, Hafer und Gerste, Zuckerrüben, Kartoffeln, futterbaulich genutzte Grasbestände, Kohle, Liliengewächs, wie z.B. Zwiebeln, Knoblauch, Lauch, Schnittlauch Hyazinthen, und Spargelgewächse wie z. B. Gemüsespargel.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

Auf einem altgedüngten Sandboden wurden 2 Vergleichflächen von jeweils 1 m² mit Zwiebel der Sorte "Stuttgarter Riesen" bepflanzt. Der Pflanzabstand in der Reihe betrug ca. 8 cm, der Reihenabstand ca. 18 cm. Nachdem die Zwiebeln 5 cm aufgewachsen waren, wurde Unkraut gejätet, Fläche A wurde nicht zusätzlich gedüngt, Fläche B wurde mit 45 g (ca. 60kg/ha Schwefel) aus der der erfindungsgemäßen Mischung, enthaltend schwefelvernetztes Triglycerid auf Basis von Rapsöl mit einem Schwefelgehalt von 14,3 % sowie 2% Stärke als Rieselhilfsmittel, gedüngt.

Die gesamte Fläche wurde jeden 2. Tag bis zum Ende der Wachstumsphase mit einer Wassermenge von 2,01/m² beregnet.

Am Ende der Wachstumsphase wurden die Zwiebeln geerntet und 1 Woche lang luftgetrocknet.

Die Zwiebeln aus den Vergleichsflächen wurden gewogen und vermessen

| Feld | A (Vergleich, ohne Düngung) | B [erfindungsgemäß gedüngt] |
|---|---|---|
| Gewicht [g] | 48+/-7g | 81+/-12g |
| Durchmesser | 51 +/- 2 mm | 64 +/- 4 mm |

Die Versuchsergebnisse zeigen eindeutig, dass der Ernteertrag der mit der erfindungsgemäßen Mischung gedüngten Zwiebeln fast doppelt so groß ist, wie ohne Düngung.

## Patentansprüche

1. Mischung enthaltend mindestens ein schwefelvernetztes Triglycerid und mindestens ein Rieselhilfsmittel auf Basis von Kieselsäure, Stärke, Bentonit und/oder Metalloxiden.

2. Mischung nach Anspruch 1, **dadurch gekennzeichnet, dass** es sich bei den Triglyceriden um Babussaöl, Baumwollsaatöl, Borretschöl, Distelöl, Erdnussöl, Johannisbeerkernöl, Haselnussöl, Heringsöl, Holzöl, Jojobaöl, Kokosöl, Klauenöl, Knochenöl, Leberöl, Leinöl, Maiskeimöl, Mandelöl, Olivenöl, Palmkernöl, Rapsöl, Rizinusöl, Sardinenöl, Senfsaatöl, Sojabohnenöl, Sonnenblumenöl, Sheabutter, Traubenkernöl und/oder Walnussöl handelt.

3. Mischung nach Anspruch 1 oder 2, **dadurch gekennzeichnet, dass** das schwefelvernetzte Triglycerid erhältlich ist über die Umsetzung von mindestens einem Triglycerid mit dem Schwefel bei Temperaturen von > 150°C.

4. Mischung nach einem oder mehreren der Ansprüche 1 bis 3, **dadurch gekennzeichnet, dass** der Schwefelanteil in dem schwefelvernetzten Triglycerid 10-30% beträgt.

5. Mischung nach einem oder mehreren der Ansprüche 1 bis 4, **dadurch gekennzeichnet, dass** der Anteil an Rieselhilfsmittel 0,1-40 % beträgt.

6. Mischung nach einem oder mehreren der Ansprüche 1 bis 5, **dadurch gekennzeichnet, dass** diese weitere Zusatzstoffe enthält.

7. Verfahren zur Herstellung der Mischung nach einem oder mehreren der Ansprüche 1 bis 6, **dadurch gekennzeichnet, dass** das schwefelvernetzte Triglycerid vermahlen und mit dem Rieselhilfsmittel und gegebenenfalls weiteren Zusatzstoffen gemischt wird.

8. Verwendung der Mischung nach einem oder mehreren der Ansprüche 1 bis 6 als Düngemittel.

9. Verwendung der Mischung nach einem oder mehreren der Ansprüche 1 bis 6 zur Beschleunigung des Wachstums bei Pflanzen mit Schwefelbedarf.

10. Verwendung von schwefelvernetztem Triglycerid als Düngemittel.

11. Düngemittel enthaltend mindestens eine Mischung nach einem oder mehreren der Ansprüche 1 bis 6.
